# EUROPEAN PATENT APPLICATION

(11) **EP 2 080 788 A1**
(43) Date of publication of application: **22.07.2009**
(21) Application number: 07830921.8
(22) Date of filing: 31.10.2007
(51) Int. Cl.: C08L 77/00, C08J 3/22, C08K 3/00, C08K 5/00

(54) **PELLET BLEND OF POLYAMIDE RESIN COMPOSITION, MOLDED ARTICLE, AND PROCESS FOR PRODUCING PELLET BLEND**

(30) Priority: 01.11.2006 JP 2006297338
(71) Applicant: Mitsubishi Engineering-Plastics Corporation, Chuo-ku Tokyo 104-0031 (JP)
(72) Inventor: HIRONO, Masaki, Hiratsuka-shi, Kanagawa 254-0016 (JP)
(74) Representative: Müller-Boré & Partner Patentanwälte
(86) International application number: PCT/JP2007/071187
(87) International publication number: WO 2008/053911

(57) **Abstract**

Abstract

Provided is a pellet blend excellent in both of the surface design and the high cycle performance. A pellet blend containing: a polyamide resin composition pellet (A) containing 30 to 100% by weight of a polyamide resin (a) and 70 to 0% by weight of an inorganic filler (b), the polyamide resin (a) containing at least a crystalline polyamide resin showing a crystallization-temperature on cooling stage (Tc) of 210°C or lower measured by differential scanning calorimeter and/or an amorphous polyamide resin (a-1); and a lubricant pellet (B) containing 1 to 30% by weight (on the basis of the lubricant pellet) of a lubricant (c) in a polyamide resin (a-3), at a ratio by weight of polyamide resin composition pellet (A)/lubricant pellet (B) of (80 to 99.5)/(20 to 0.5).

## Description

### TECHNICAL FIELD

The present invention relates to a novel pellet blend, and more specifically to a pellet blend excellent in both of surface design and molding cycle performance, while keeping rigidity and strength.

### BACKGROUND ART

Generally, polyamide resins are widely used for automobile parts, electric/electronic parts, construction materials, home-use notions and so forth, by virtue of their excellent mechanical characteristics, heat resistance, impact resistance, chemical resistance and so forth. Of those, polyamide resins obtained after being mixed with inorganic fillers, represented by glass fiber, have been known to be improved in the strength, rigidity and heat resistance to a considerable degree.
However, the polyamide resins having large contents of these inorganic fillers, in particular a large content of glass fiber, have been limited in the applicable fields, because molded articles of the polyamide resin molded by injection-molding might have the glass fiber exposed onto the surface thereof, and might largely degrade the surface design.
In order to solve these problems, there has been proposed a method of adding an amorphous polyamide resin to a crystalline polyamide resin, and further mixing an inorganic filler such as glass fiber (Patent Documents 1, 2, for example).
There has been proposed also a method of adding an inorganic filler such as glass fiber to a polyamide resin having a relatively low crystallization-temperature on cooling stage, such as the one obtained by co-polymerizing adipic acid, isophthalic acid and hexamethylene diamine (referred to as polyamide 66/6I copolymer, hereinafter) (Patent Document 3, 4).
These methods might have succeeded in obtaining relatively-desirable appearance of the molded articles, but have a long molding cycle performance, and be degraded in the productivity because of influence by the amorphous polyamide resin and the polyamide resin having a low crystallization-temperature on cooling stage. In addition, the methods have sometimes resulted in lowered hot strength and lowered creeping characteristics, and thereby the products have adversely been affected.

Patent Document 1: Japanese Laid-Open Patent Publication No. 2000-154316
Patent Document 2: Japanese Laid-Open Patent Publication No. 2000-345032
Patent Document 3: Japanese Laid-Open Patent Publication No. H11-71518
Patent Document 4: Japanese Laid-Open Patent Publication No. 2000-178441

### DISCLOSURE OF THE INVENTION

### SUBJECTS TO BE SOLVED BY THE INVENTION

It is therefore an object of the present invention to provide a pellet blend excellent in both of the surface design and the high cycle performance, while resolving the above-described conventional drawbacks, and in particular to provide a pellet blend excellent in both of the surface design and the high cycle performance, without being degrading the flexural strength and flexural modulus.

### MEANS FOR SOLVING THE SUBJECTS

In this situation, it was found that, from our extensive investigations into the ingredients of the polyamide resin and method for manufacturing of the polyamide resin, that the above-described objects may be achieved by manufacturing the polyamide resin, reinforced by an inorganic filler, by a specific method. More specifically, the present inventors found out that the above-described subjects may be solved by the means below.
(1) A pellet blend containing:
   a polyamide resin composition pellet (A) containing 30 to 100% by weight of a polyamide resin (a) and 70 to 0% by weight of an inorganic filler (b), the polyamide resin (a) containing at least a crystalline polyamide resin showing a crystallization-temperature on cooling stage (Tc) of 210°C or lower measured by differential scanning calorimeter and/or an amorphous polyamide resin (a-1); and
   a lubricant pellet (B) containing 1 to 30% by weight (on the basis of the lubricant pellet) of a lubricant (c) in a polyamide resin (a-3),
   at a ratio by weight of polyamide resin composition pellet (A)/lubricant pellet (B) of (80 to 99.5)/(20 to 0.5).
(2) The pellet blend as described in (1), wherein the content of the inorganic filler (b) in the polyamide resin composition pellet (A) is 15 to 60% by weight.
(3) The pellet blend as described in (1) or (2), wherein the lubricant pellet (B) further contains 5 to 50% by weight of an inorganic filler (d) in the lubricant pellet (B).
(4) The pellet blend as described in any one of (1) to (3), wherein the polyamide resin (a-1) is at least one species of polyamide resin selected from the group consisting of polyamide resin obtained from xylylenediamine and an α,ω-straight-chain aliphatic dibasic acid, polyamide 6, polyamide 6I/6T copolymer, and polyamide 66/6I copolymer.
(5) The pellet blend as described in any one of (1) to (3), wherein the polyamide resin (a-1) is at least two species of polyamide resin selected from the group consisting of polyamide resin obtained from xylylenediamine and an α,ω-straight-chain aliphatic dibasic acid, polyamide 6, polyamide 6I/6T copolymer, and polyamide 66/6I copolymer.
(6) The pellet blend as described in any one of (1) to (3), wherein the polyamide resin (a-1) contains at least a polyamide resin obtained from xylylenediamine and an α,ω-straight-chain aliphatic dibasic acid.
(7) The pellet blend as described in any one of (1) to (6), wherein the polyamide resin (a) contains at least polyamide 66 as a polyamide resin (a-2) other than the polyamide resin (a-1).
(8) The pellet blend as described in any one of (1) to (7), wherein the inorganic filler (b) is at least one species selected from the group consisting of glass fiber, mica, talc and wollastonite.
(9) The pellet blend as described in any one of (1) to (8), wherein the lubricant (c) is at least one species selected from the group consisting of metal salt of aliphatic acid, aliphatic acid ester, hydrocarbon-base compound and ketone compound.
(10) A molded article obtained by using the pellet blend described in any one of (1) to (9).
(11) The molded article as described in (10), which is used as a part of vehicle or construction material.
(12) A method for manufacturing a pellet blend, comprising mixing a polyamide resin composition pellet (A) containing 30 to 100% by weight of a polyamide resin (a) and 70 to 0% by weight of an inorganic filler (b), the polyamide resin (a) containing at least a crystalline polyamide resin showing a crystallization-temperature on cooling stage (Tc) of 210°C or lower measured by differential scanning calorimeter and/or an amorphous polyamide resin (a-1); and
   a lubricant pellet (B) containing 1 to 30% by weight (on the basis of the lubricant pellet) of lubricant (c) in a polyamide resin (a-3),
   at a ratio by weight of polyamide resin composition pellet (A)/lubricant pellet (B) of (80 to 99.5)/(20 to 0.5).
(13) A method of improving molding cycle performance of a resin composition pellet, which comprises mixing a polyamide resin composition pellet (A) containing 30 to 100% by weight of a polyamide resin (a) and 70 to 0% by weight of an inorganic filler (b), the polyamide resin (a) containing at least a crystalline polyamide resin showing a crystallization-temperature on cooling stage (Tc) of 210°C or lower measured by differential scanning calorimeter and/or an amorphous polyamide resin (a-1); and
   a lubricant pellet (B) containing 1 to 30% by weight (on the basis of the lubricant pellet) of lubricant (c) in a polyamide resin (a-3),
   at a ratio by weight of polyamide resin composition pellet (A)/lubricant pellet (B) of (80 to 99.5)/(20 to 0.5).

### Effect of the Invention

By virtue of the present invention, a polyamide resin composition excellent in both of surface design and high cycle performance is now obtainable. In particular, it is now possible to obtain a polyamide resin composition having a mechanical strength as large enough as allowing the composition to substitute metals.
Moreover, by separately manufacturing the polyamide resin composition pellet (A) of the present invention and the lubricant pellet (B) containing a lubricant component, and then mixing them to produce the pellet blend, only a small amount of lubricant may suffice for the purpose of achieving both of high cycle performance and excellent surface design, as compared with the case where the lubricant component is directly co-kneaded. The present invention is therefore beneficial from the industrial viewpoint.

### Best Modes for Carrying Out the Invention

Contents of the present invention will be detailed below. Note that a word "... to ..." in this specification will be used to indicate a range including the lower and upper limits represented by the numerals given before "to" and after "to", respectively.

### Polyamide Resin Composition Pellet (A)

The polyamide resin composition pellet (A) used in the present invention contains at least 30 to 100% by weight of a polyamide resin (a) which contains a crystalline polyamide resin (a-1) showing a crystallization-temperature on cooling stage (Tc) of 210°C or lower measured by differential scanning calorimeter, and 70 to 0% by weight of an inorganic filler (b).

### Polyamide Resin (a)

The polyamide resin (a) used in the present invention is a resin containing at least a crystalline polyamide resin showing a crystallization-temperature on cooling stage (Tc) of 210°C or lower measured by differential scanning calorimeter and/or an amorphous polyamide resin (a-1).

The crystallization-temperature on cooling stage in the present invention means a peak-top temperature of an exothermic peak observed by differential scanning calorimetry (DSC). The exothermic peak herein is defined as a peak observed when a sample is once melted by heating so as to exclude influences by thermal history as possible, and then by cooling the sample. More specifically, the peak-top temperature may be determined according to a procedure below. The sample is heated from 30 to 300°C at a rate of heating of 10°C/min and kept at 300°C for 2 minutes. Thereafter, the sample is cooled down to 30°C at a rate of cooling of 20°C/min, and the crystallization-temperature on cooling stage is determined based on the top of the exothermic peak observed in the cooling. In the present invention, note that "showing a crystallization-temperature on cooling stage of 210°C or lower" means that a crystallization-temperature on cooling stage observed by DSC always falls on 210°C or lower, so far as the relative viscosity is kept in the range from 2.0 to 3.5 as described later.
The polyamide resin (a-1) may preferably be those satisfying a requirement of Tc=205°C or lower. When the crystallization temperature of the polyamide resin (a-1) exceeds 210°C, grass fiber is exposed on the surface of an obtainable molded article, and therefore, the molded article excellent in the appearance is not obtained. The polyamide resin (a-1) may preferably be those satisfying a requirement such that the relative viscosity measured in a 96% sulfuric acid, at a resin content of 1 g/100 ml, and at 25°C is 2.0 to 3.5. The relative viscosity smaller than 2.0 may result in lowering in the mechanical strength, and the relative viscosity exceeding 3.5 may result in degradation in the moldability.

As the polyamide resin (a-1), adoptable are non-mixed homopolymers, non-mixed copolymers, mixtures of homopolymers, mixtures of copolymers, and mixtures of copolymers and homopolymers obtained by appropriately combining polyamide-formable monomers which include ε-caprolactam, adipic acid, sebacic acid, dodecanedioic acid, isophthalic acid, terephthalic acid, hexamethylene diamine, tetramethylene diamine, 2-methyl pentamethylene diamine, 2,2,4-trimethyl hexamethylene diamine, metaxylylenediamine, bis(3-methyl-4-aminocyclohexyl) methane and so forth.
Specific examples of the crystalline polyamide resin showing Tc of 210°C or lower include homopolymers such as polyamide 6, nylon 610, polyamide 612, polyamide 12, polyamide resin (polyamide MXD6) obtained by polymerizing xylylenediamine and adipic acid, polyamide resin (polyamide MP6) obtained by polymerizing metaxylylenediamine and paraxylenediamine and adipic acid, polyamide 6I obtained by polymerizing hexamethylene diamine and isophthalic acid, polyamide PACM obtained by polymerizing isophthalic acid and bis(3-methyl-4-aminocyclohexyl) methane; and copolymers such as 66/6I obtained by polymerizing adipic acid and isophthalic acid and hexamethylene diamine, without limiting the present invention. Preferable examples include polyamide 6, polyamide MXD6, polyamide 66/6I copolymer, polyamide 66/6I copolymer, and polyamide MP6.
These polyamide resins may be used independently, or in a combined form contributed by two or more species.

Specific examples of the amorphous polyamide resin include polyamide TMDT obtained by polymerizing terephthalic acid and 2,2,4-trimethyl hexamethylene diamine; polyamide 6I/6T copolymer obtained by polymerizing isophthalic acid, terephthalic acid and hexamethylene diamine; copolymers obtained by polymerizing terephthalate salt of metaxylylenediamine and/or isophthalate salt, and ε-caprolactam; and copolymers obtained by polymerizing terephthalate salt of hexamethylene diamine and/or isophthalate salt with ε-caprolactam, but are not limited thereto. A more preferable example is polyamide 6I/6T copolymer.

The polyamide resin composition pellet (A) may contain the polyamide resin (a-2), other than the above-described polyamide resin (a-1). This sort of polyamide resin (a-2) may preferably satisfy a requirement of Tc=220°C or higher, and may be exemplified by polyamide 46 obtained by polymerizing 1,4-diaminobutane and adipic acid, polyamide 66 obtained by polymerizing hexamethylene diamine and adipic acid, and blends of these resins. By using a small amount of polyamide resin having a Tc of 220°C or higher, the rate of crystallization may be enhanced, and the mold releasing performance and molding cycle performance may be improved.
For the case where the polyamide resin (a-2) is used, the ratio of polyamide resin (a-1) and the polyamide resin (a-2) is preferably adjusted to (a-1) / (a-2)=(50 to 95) / (50 to 5) (ratio by weight), and more preferably (75 to 92.5 ) / (25 to 7.5) (ratio by weight). The ratio of mixing adjusted to these ranges may raise tendencies of effectively improving the mold releasing performance and molding cycle performance, and of further improving the appearance.

### (b) Inorganic Filler

The inorganic filler (b) adoptable in the present invention may be any of publicly-known inorganic fillers, without special limitations on the geometry, allowing any geometry of fiber, plate, needle, sphere, powder and so forth. Species of the inorganic filler may be exemplified by glass fiber, carbon fiber, talc, mica, glass flake, wollastonite, potassium titanate, magnesium sulfate, sepiolite, zonolite, aluminum borate, glass beads, balloon, calcium carbonate, silica, kaolin, clay, carbon black, titanium oxide, barium sulfate, zinc oxide, magnesium hydroxide and so forth, wherein they may be used independently or in a combined form contributed by two or more species. From the viewpoints of excellence in balance among the mechanical strength, rigidity and surface appearance, and of availability, the inorganic filler may more preferably be exemplified by glass fiber, mica, talc, and wollastonite.

The glass fiber is not specifically limited so far as they are selected from those generally used for reinforcing resins, and may be selected typically from those of long fiber type (roving), short fiber type (chopped strand) and so forth, wherein the mean fiber length is generally 6 to 15 µm. The mean fiber length may be not specifically limited, but preferably falls in the range from 0.1 to 20 mm, and more preferably from 1 to 10 mm. Mica, talc and wollastonite are not limited in the particle size thereof, and may be selected from those having arbitrary size, wherein those having a particle size of 1 to 80 µm are preferable, and those having a particle size of 5 to 50 µm are more preferable. By using these sorts of inorganic filler, an effect of reinforcement ascribable to the inorganic filler may more effectively be expressed, and thereby the molded article excellent in the surface design and dimensional stability may be obtained.

These inorganic fillers may optionally be treated on the surfaces thereof with a binder and/or surface treating agent, from the viewpoint of improving the readiness in handling, and adhesiveness to the resin.
The binder and/or surface treating agent adoptable herein may include any publicly-known binders and surface treating agents, exemplified by silane-base compounds such as γ-methacryloxypropyl trimethoxysilane, γ-glycidoxypropyl trimethoxysilane and γ-aminopropyl triethoxysilane; epoxy-base compounds; isocyanate-base compounds; titanate-base compounds and so forth. The amount of adhesion of these binders and/or surface treating agents may be adjustable preferably to 0.01% by weight or more on the basis of weight of the inorganic filler (b), and more preferably to 0.05% by weight or more. The upper limit value may be adjusted to 1% by weight or smaller, although not specifically limited.
In response to further needs, also adoptable are lubricants such as aliphatic amide compounds and silicone oils; antistatic agents such as quaternary ammonium salts; film-forming resins such as epoxy resins and urethane resins; and coat-forming resins combined with heat stabilizer, flame retardant and so forth.
The inorganic filler (b) adoptable in the present invention may preliminarily be subjected to binder treatment or surface treatment using the above-described binders and/or surface treating agents, or the above-described binders and/or surface treating agents may be added together with the untreated inorganic filler in the process of manufacturing the polyamide resin composition pellet (A).

The ratio of mixing of the polyamide resin (a) and the inorganic filler (b) in the polyamide resin composition pellet (A) used for the present invention may be given as polyamide resin (a)/inorganic filler (b) = (30 to 100) / (70 to 0) (ratio by weight). The amount of mixing of the inorganic filler exceeding the upper limit value may result in degradation in the workability. More preferably ratio of mixing may be given as polyamide resin (a)/inorganic filler (b) = (40 to 85) / (60 to 15) (ratio by weight), and more preferably given as polyamide resin (a)/inorganic filler (b) = (35 to 80) / (65 to 20) (ratio by weight).

### (B) Lubricant Pellet

In the present invention, the lubricant pellet (B) is a component necessary for accomplishing the present invention. More specifically, the lubricant pellet (B) is a lubricant master batch containing the polyamide resin (a-3) and at least one or more species of the lubricant (c) to as much as 1 to 30% by weight in the pellet. By using the lubricant in a form of master batch pellet, the mold releasing performance in the process of molding may be improved, and the surface design of the resultant molded article may be made excellent. Also the time for cooling in the process of molding may be shortened, and thereby the molding cycle performance may be improved.
For the general case of manufacturing the resin composition pellet using a vent-type extruder, the lubricant may vaporize from a vent or strand in the process of melt kneading, so that there may be a fear of lowering in the content of lubricant in the resin composition pellet used for molding, or a fear of generation of outgas in the process of manufacturing the resin composition pellet. Now, by using the lubricant in a form of lubricant pellet as in the present invention, the vaporization of lubricant component and nonconformities in the process of manufacturing the resin composition pellet may be avoidable, and thereby the content of the lubricant in the resin composition may be kept at a desired level.
Moreover, the lubricant component may be more unevenly distributed in the molded article in the region thereof more closer to the surface in the process of molding, by adding the lubricant in a form of lubricant pellet, so that it is supposed that the resultant molded article will have a larger concentration of lubricant in the surficial portion thereof, and thereby an effect of improving the mold releasing performance and molding cycle performance, larger than that expected from the amount of addition, may be achieved.
The polyamide resin (a-3) used for the lubricant pellet (B) is not specifically limited in species, and may be of the same species as the polyamide resin (a) used for the polyamide resin composition pellet (A), or may be different therefrom.
In the present invention, the polyamide resin (a-3) used for the lubricant pellet (B) may preferably contain a resin selected from the polyamide resin (a), may preferably contain the same polyamide resin as the polyamide resin (a) contained in the polyamide resin composition pellet (A) from the viewpoint of compatibility, may more preferably contain the same polyamide resin as the polyamide resin (a) contained in the polyamide resin composition pellet (A) to as much as 10% by weight or more, and may particularly preferably be the same as the polyamide resin (a) contained in the polyamide resin pellet (A).

### (c) Lubricant

The lubricant (c) used in the present invention may be exemplified by metal salt of aliphatic carboxylic acid, aliphatic carboxylic acid ester, aliphatic carboxylic acid, hydrocarbon-base compound, paraffin wax, ketone compound, carboxylic acid amide, and bisamide compound. Among these, metal salt of aliphatic carboxylic acid, aliphatic carboxylic acid ester, hydrocarbon-base compound and ketone compound are preferable, and metal salt of aliphatic carboxylic acid and aliphatic carboxylic acid ester are more preferable.
The metal salt of aliphatic carboxylic acid preferably means metal salts of higher aliphatic acids having 16 to 36 carbon atoms, and may be exemplified by magnesium stearate, calcium stearate, barium stearate, calcium montanate, sodium montanate, zinc stearate, aluminum stearate, sodium stearate, and lithium stearate.
The aliphatic carboxylic acid ester means compounds composed of aliphatic carboxylic acids and alcohols, and may be exemplified by bees wax, lanolin, stearyl stearate, behenyl behenate, stearyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate, and pentaerythritol tetrastearate.
The content of the lubricant (c) in the lubricant pellet (B) is adjusted to 1 to 30% by weight, and preferably 5 to 15% by weight. A content of less than 1% by weight may raise only a limited effect of improving the molding cycle performance when it is mixed, and a content exceeding 30% by weight may raise nonconformities such that the lubricant pellet (B) becomes more difficult to be manufactured, or that outgas in the process of molding after mixing increases.

### (d) Inorganic Filler

The lubricant pellet (B) may preliminarily be added with the inorganic filler (d), besides the lubricant (c), for the purpose of avoiding degradation in the strength and productivity of the molded article. The inorganic filler (d) may be exemplified by those exemplified as the above-described inorganic filler (b) used for the polyamide resin composition pellet (A), wherein two or more species may be used in combination. Among these, glass fiber and talc are preferable from the viewpoint of a good balance among the mechanical strength, rigidity and surface appearance, and a good availability, and combined use of glass fiber and talc is more preferable in view of further improving the mechanical strength, molding cycle performance, surface appearance, and weatherability.
The content of the inorganic filler (d) is preferably adjusted to 5 to 50% by weight of the lubricant pellet (B), and more preferably adjusted to 15 to 45% by weight. By adjusting the content to these ranges, the surface appearance may further, and desirably, be improved.

Any general methods may be adoptable to manufacturing of the polyamide resin composition pellet (A) and the lubricant pellet (B), without special limitation. Methods of melt kneading using general apparatuses, such as single-screw or multi-screw extruder, and preferably vent-type extruder or analogues thereof, may be exemplified. The vent-type extruder may raise an effect of improving the adhesiveness between the resin and the inorganic filler such as glass fiber, mica and so forth, by removing gas (air and moisture) contained in the resin composition, and an effect of removing components, sucn as oligomers, causative of nonconformities in the process of molding.
In the present invention, the moisture content in the resin composition pellet is preferably adjusted to 0.2% by weight, using a vent-type extruder. By adjusting the moisture content to this range, contamination of molds may more effectively be avoidable, and thereby the molded article excellent in the appearance may more readily be obtained.
The amount of mixing of the polyamide resin composition pellet (A) and the lubricant pellet (B) is given as (A) / (B) = (80 to 99.5) / (20 to 0.5) in ratio by weight, preferably (85 to 99) / (15 to 1), and more preferably (90 to 98.8) / (10 to 1.2). The amount of mixing of the lubricant pellet (B) in the pellet blend of the present invention less than 0.5% by weight may result in only a limited effect of improving the molding cycle performance, and the amount exceeding 20% by weight may result in increase in the outgas in the process of molding, the both are undesirable.

In the pellet blend of the present invention, the content of the lubricant (c) in the pellet blend may preferably be 0.01 to 2% by weight, and more preferably 0.05 to 1% by weight. By adjusting the content of the lubricant (c) within the above-described ranges, the outgas in the process of molding, non-uniform transfer of molded articles and generation of silver streak may more readily be avoidable.
In the present invention, the content of the inorganic fillers (total contents of (b) and (d)) in the pellet blend is preferably 20 to 70% by weight, and more preferably 30 to 65% by weight. The mechanical strength may tend to increase by adjusting the total content of the inorganic fillers to 20% by weight or more, and manufacturing of the pellet may tend to be facilitated, and also the surface design of the molded article may tend to be improved by adjusting the content to 70% by weight or less. For an exemplary case where the content of the inorganic filler (b) in the polyamide resin composition pellet (A) is 15 to 60% by weight, the content of the inorganic filler (d) in the lubricant pellet (B) may preferably be 15 to 45% by weight of the pellet (B). It may be especially preferable that the inorganic filler (b) content in the polyamide resin composition pellet (A) is 40 to 60% by weight, and the inorganic filler (d) content in the lubricant pellet (B) is 20 to 40% by weight of the pellet (B).

The resin composition pellet (A) and the lubricant pellet (B) used in the present invention may optionally be added with any publicly-known resin additives, besides the above-described components, without departing from the spirit of the present invention. The additives may be exemplified by dye/pigment, antioxidant, heat stabilizer, mold releasing agent, ultraviolet absorber, antistatic agent, color modifier, foaming agent, plasticizer, nucleating agent, impact modifier and so forth. A single species, two, or more species of these additives and so forth may be added.
The resin composition pellet (A) and the lubricant pellet (B) used in the present invention may further optionally contain a resin as a part of the resin component, besides the polyamide resin, so far as the effects of the present invention will not be impaired. Thermoplastic resins adoptable thereto may be exemplified by polyphenylene ether resin, acryl resin, polyester resin, polyphenylene sulfide resin, liquid crystalline polyester resin, and polyacetal resin. Thermosetting resins adoptable thereto may be exemplified by phenol resin, melamine resin, silicone resin, and epoxy resin. The amount of mixing for the case where the resin other than the polyamide resin is contained is preferably adjusted to 50% by weight or less, and more preferably to 30% by weight, of the total weight of the polyamide resin (a) and the polyamide resin (a-3) in the pellet blend of the present invention.

The polyamide resin composition pellet (A) used for the pellet blend of the present invention may be manufactured by any methods not specifically limited, and may be manufactured by mixing the polyamide resin (a), the inorganic filler (b), and other optionally-added components at a predetermined ratio, melting and kneading the mixture, and then cutting the product into pellets.
Methods of melting and kneading may be any publicly-known methods. For example, all materials may be charged at a time into a single-screw or double-screw extruder, Banbury mixer or analogous apparatus, from the base portion of the extruder and may be melted and kneaded; or the polyamide resin (a) and other optionally added components may initially be charged and melted, and thereafter the inorganic filler (b) may be charged by side-feeding and melted. Also the lubricant pellet (B) may be manufactured by the same method as that for manufacturing the polyamide resin composition pellet (A). For example, the polyamide resin (a-3), the lubricant (b) and other optionally added components may be charged at a time into an extruder and may be melted and kneaded. When the inorganic filler (d) is mixed, the inorganic filler (d) may be charged by side-feeding.
In the process of melting and kneading using an extruder, the resin composition in the extruder is extruded from a die in a form of a single to several tens of strands, the strands are then solidified under cooling in a cooling water bath or in the air, and the products are then cut into pellets using a strand cutter. Each of thus-manufactured pellets generally has a geometry of elliptic cylinder or circular cylinder. The pellet may preferably be 1 to 5 mm long, and more preferably 2 to 4 mm long. The pellet having elliptic section may preferably have a major axis of 2 to 3. 5 mm long and a minor axis of 1 to 2.5 mm long, whereas the pellet having a circular section may preferably have a diameter of 2 to 3 mm. The length and sectional geometry of the pellet may be adjustable based on the number of rotation of blade of the strand cutter, speed of winding, and volume of discharge of extruder. The polyamide resin composition pellet (A) and the lubricant pellet (B) may preferably be approximated as possible in the geometry and size. By designing the pellets as described in the above, the blend of the polyamide resin composition (A) and the lubricant pellet (B) may be prevented from being classified in the process of molding, may be plasticized while suppressing generation of unmelted matter and entrainment of air, and thereby the molded article excellent in the mechanical strength and surface design may be obtained.

Any general methods may be adoptable to manufacturing of the pellet blend of the present invention, without special limitation. The methods are exemplified by a method based on post-blending, using a weight feeder, of the lubricant pellet (B) obtained by the above-described method to the polyamide resin composition pellet (A) obtained by the above-described method; and a method of mixing the polyamide resin composition pellet (A) and the lubricant pellet (B) using a stirrer apparatus such as a tumbler.
The pellet blend of the present invention obtained as described in the above may be molded by any methods generally adopted to thermoplastic resin composition, wherein injection-molding may be preferable from the viewpoint of fluidity.

The molded article obtained by using the pellet blend of the present invention have excellent mechanical strength and desirable molding cycle performance, and the molded article composed thereof is excellent in the surface design, so that the molded article may be useful particularly for components for vehicles and construction materials. For vehicle use, the molded article may preferably adoptable to exterior and interior components of vehicles, such as door mirror stay, inner mirror stay, door handle, door mirror bracket, roof rail, wiper arm and so forth. For construction use, the molded article may preferably adoptable to crescent lock, door handle knob, French bolt and so forth.

### Example

The present invention will further specifically be detailed below referring to Examples. Note that materials, amount of use, ratio, details of processes, procedures of processes and so forth may appropriately be modified, without departing from the gist of the present invention. The scope of the present invention is, therefore, by no means limited by the specific examples described below.

Materials used in Examples and Comparative Examples are listed below.
(1) Polyamide resin 1: poly(metaxylylene adipamide) (referred to as "polyamide MXD6", hereinafter), from Mitsubishi Gas Chemical Company, Inc., relative viscosity=2.14 (measured in a 98% sulfuric acid at 25°C), crystallization-temperature on cooling stage =205°C
(2) Polyamide resin 2: polyamide 66, from Toray Industries, Inc., under the trade name of Amilan CM3001-N, relative viscosity=2.95 (measured similarly to as in (1) in the above), crystallization-temperature on cooling stage =225°C
(3) Polyamide resin 3: polyamide 6, from Mitsubishi Engineering-Plastics Corporation, under the trade name of Novamid (registered trademark) 1007J, relative viscosity=2.20 (measured similarly to as in (1) in the above), crystallization-temperature on cooling stage =180°C
(4) Polyamide resin 4: polyamide 6I/6T copolymer, from Mitsubishi Engineering-Plastics Corporation, under the trade name of Novamid (registered trademark)X21, relative viscosity=2.80 (measured similarly to as in (1) in the above)
(5) Polyamide resin 5: polyamide 66/6I copolymer, relative viscosity=2.30 (measured similarly to as in (1) in the above), crystallization-temperature on cooling stage =198°C

### [Method of Manufacturing Polyamide Resin 5]

In a 5-liter autoclave, 2.0 kg of an equimolar salt of adipic acid and hexamethylene diamine, 0.5 kg of an equimolar salt of isophthalic acid and hexamethylene diamine, and 2.5 kg of pure water were charged, and the mixture was thoroughly stirred in an atmosphere purged with nitrogen. The temperature of the mixture, kept under stirring, was then elevated from room temperature or around up to 220°C over approximately one hour. Thereafter, the temperature was elevated to 260°C over approximately two hours, while removing water out of the reaction system so as to keep the inner pressure of the autoclave at 18 kg/cm²-G. The heating was then stopped, the autoclave was tightly closed, cooled down to room temperature or around over approximately 8 hours, to obtain approximately 2 kg of a polyamide 66/6I (compositional ratio by weight=78.5/21.5) polymer. The obtained polymer was then crushed, and allowed to proceed solid-phase polymerization in a 10-liter evaporator, under a nitrogen atmosphere at 200°C for 10 hours so as to increase the molecular weight. A polymer having a viscosity of 2.30 was obtained.
(6) Glass fiber :chopped strand, from Asahi Fiber Glass Co., Ltd., under the trade name of CS03-JAFT2, mean fiber length=3 mm, mean fiber diameter=10 µm
(7) Mica: Suzorite Mica, from Kuraray Trading Co., Ltd., under the trade name of 325HK, weight-average particle size=20 µm
(8) Talc 1: from Hayashikasei, Inc., under the trade name of Micron White 5000A, weight-average particle size=4.7 µm
(9) Talc 2: from Fuji Talc Industrial Co., Ltd., under the trade name of TM-2, weight-average particle size=14.3 µm
(10) Wollastonite: from NYCO, under the trade name of Nyglos 8, weight-average particle size=8 µm
(11) Carbon black 1 : from Mitsubishi Chemical Corporation, #45, weight-average particle size=24 µm
(12) Carbon black 2: from Mitsubishi Chemical Corporation, #960, weight-average particle size=16 µm
(13) Lubricant 1: barium stearate, from Sakai Chemical Industry Co., Ltd.
(14) Lubricant 2: montanic acid ester, from Clariant, under the trade name of Licowax E
(15) Lubricant 3: sodium montanate, from Clariant, under the trade name of Licomont NAV101
(16) Lubricant 4: carboxylic acid amide-base wax, from Kyodo Yushi Co. , Ltd., under the trade name of Lightamide WH255
(17) Lubricant 5: stearyl stearate, from Riken Vitamin Co., Ltd., under the trade name of SL-900A
(18) Lubricant 6: ketone wax, from Cognis Japan, Ltd., under the trade name of Loxiol EP2036-18 (19) Lubricant 7: polyethylene wax, from Mitsui Chemicals, Inc., under the trade name of Hi-wax 405MP
(20) Lubricant pellet 1: The polyamide resin 1, the polyamide resin 2, the talc 1 and the lubricant 1 were weighed at a ratio of mixing of 60/10/20/10 (ratio by weight), mixed in a tumbler for 20 minutes, the mixture was then kneaded under melting in a vent-type extruder (from Toshiba Machine Co., Ltd., TEM37BS) at 270°C, the mixture was extruded into strands, cooled in a water bath, cut, and dried, to thereby obtain elliptic cylindrical pellets of 3 to 3.5 mm long.
(21) Lubricant pellet 2: The polyamide resin 1, the polyamide resin 2, the talc 1, the glass fiber, and the lubricant 1 were mixed at a ratio of mixing of 40/10/20/20/10 (ratio by weight), the components excluding the glass fiber were mixed in a tumbler for 20 minutes, charged to a hopper at a time, while adding the glass fiber by side-feeding, the mixture was melted and kneaded in a vent-type extruder (from Toshiba Machine Co. , Ltd., TEM37BS) at 270°C, the mixture was extruded into strands, cooled in a water bath, cut, and dried to thereby obtain elliptic cylindrical pellets of 3 to 3.5 mm long.
(22) Lubricant pellet 3: Pellets were manufactured similarly to the above-described (21) lubricant pellet 2, at a ratio of mixing of polyamide resin 1/polyamide resin 2/talc 1/glass fiber/lubricant 2/lubricant 3=50/5/10/30/2.5/2.5 (ratio by weight).
(23) Lubricant pellet 4: Pellets were manufactured similarly to the above-described (21) lubricant pellet 2, at a ratio of mixing of polyamide resin 1/polyamide resin 2/talc 1/glass fiber/lubricant 6=50/5/10/30/5 (ratio by weight).
(24) Lubricant pellet 5: Pellets were manufactured similarly to the above-described (21) lubricant pellet 2, at a ratio of mixing of polyamide resin 1/polyamide resin 2/talc 1/glass fiber/lubricant 7=50/5/10/30/5 (ratio by weight).

In Examples and Comparative Examples, tests for flexural characteristics, surface design, and high cycle performance were carried out as follows.

### (25) Flexural Characteristics

Test pieces were manufactured using an injection-molding machine (from FANUC Ltd., α100iA), at a primary injection pressure of 700 kgf/cm², an injection speed of 50 mm/s, a dwelling of 500 kgf/cm², an injection time of 1 second, a molding temperature of 270°C, and at mold temperatures adjusted corresponding to the glass transition temperature of the materials shown in Table 1 and Table 2. Flexural strength and flexural modulus of the test pieces were evaluated conforming to ISO-178.

### (26) Surface Design

Flat plates having a size of 180 mm×120 mm×2 mm (thickness) were manufactured using an injection-molding machine (from FANUC Ltd., α100iA), at a primary injection pressure f 800 kgf/cm², an injection speed of 50 mm/s, a dwelling of 500 kgf/cm², an injection time of 2 seconds, a molding temperature of 270°C, mold temperatures adjusted corresponding to the glass transition temperature of the materials shown in Table 1 and Table 2, and a cooling time of 15 seconds. The surface design after molding were visually observed. Degree of floating of the inorganic fillers, waviness on the surfaces of the molded articles, and non-uniformity ascribable to unsuccessful mold releasing visually observed were evaluated based on the 3-step criteria shown below:
⊚: floating of the inorganic filler, waviness on the
surface of the molded article, and non-uniformity in mold releasing not observed over the entire surface; ○: floating of the inorganic filler, waviness on the
surface of the molded article, and non-uniformity in mold releasing slightly observed over the entire surface, only to a non-problematic level for practical use; and
×: floating of the inorganic filler, waviness on the
surface of the molded article, and non-uniformity in mold releasing observed over the entire surface.

### (27) High Cycle Performance

ASTM test pieces of 50 mm long and 12.8 mm thick, used for compression test, were manufactured using an injection-molding machine (from FANUC Ltd., α100iA) at a primary injection pressure of 600 kgf/cm² an injection speed of 50 mm/s, a dwelling of 450 kgf/cm², an injection time of 0.5 seconds, a molding temperature of 270°C, and mold temperatures adjusted corresponding to the glass transition temperature of the materials shown in Table 1 and Table 2.
The high cycle performance was evaluated by repeating the molding five successive times at a certain length of time for cooling, and then at lengths of time decremented by one second, so as to find a shortest time for cooling (necessary time for cooling) allowing continuous molding. The mold releasing performance during the continuous molding at the necessary time for cooling was judged based on the criteria below:
⊚: mark of ejector pin on the test piece not observed, proving excellent mold releasing performance;
○: mark of ejector pin on the test piece slightly observed, only to a level not inhibitive to mold releasing;
Δ : notable mark of ejector pin observed more often on the test piece, or the test piece more often remain in the mold on the fixed side; and
×: the test piece ruptured or heavily deformed by an ejector pin, or failed in releasing from the mold and remained in the mold on the movable side or fixed side.

### [Examples 1 to 13]

The polyamide resins 1 to 5, and the inorganic fillers other than the glass fiber were weighed to as much as the amounts listed in Table 1 and Table 2, the materials were mixed in a tumbler and then charged at a time into a hopper, while supplying the glass fiber by a side-feeding system, the content was melted and kneaded in a vent-type extruder (from Toshiba Machine Co., Ltd., TEM37BS) at 280°C, the mixture was extruded into strands, cooled in a water bath, and cut, to thereby obtain each polyamide resin composition pellet (A) having an elliptic cylindrical geometry of 3 to 3.5 mm long.
In a process thereafter, any one of the lubricant pellets 1 to 3 was added to each of the previously-obtained pellets (A) from a separate feeder by post blending, and the mixture was dried to obtain the pellet blend. The test piece was manufactured using each of thus-obtained pellet blends, according to the method described in the above, and then evaluated. Results of evaluation are shown in Table 1 and Table 2.
All pellet blends were found to show no, or almost no floating of the inorganic filler and non-conformity in the mold releasing, and were excellent in the surface design while keeping a high level of strength. They were also found to require only short time for cooling, and to show good mold releasing performance, proving their excellent high cycle performance.

### [Comparative Examples 1 to 8]

The polyamide resins 1 to 5, the inorganic fillers other than the glass fiber and the lubricant 1, 4 or 5 were weighed, the materials were mixed in a tumbler and then charged at a time into a hopper, while supplying the glass fiber by a side-feeding system, the content was melted and kneaded in a vent-type extruder (from Toshiba Machine Co. , Ltd., TEM37BS) at 280°C, the mixture was extruded into strands, cooled in a water bath, cut, and dried, to thereby obtain each polyamide resin composition pellet having an elliptic cylindrical geometry of 3 to 3.5 mm long. The test piece was manufactured using each of thus-obtained pellets, and evaluated. Results are shown in Table 1 and Table 2.
There were tendencies of increase in the necessary time for cooling and elongation of the molding cycle, and poorer molding releasing performance, as compared with those in Examples where the lubricant pellets were mixed by post-blending.
In particular, Comparative Examples 5 to 8 were found to be considerably degraded in the mold releasing performance due to slow solidification of the surfaces, and the products were not satisfactory for practical use as the industrial products. The poor mold releasing performance sometimes also resulted in non-uniform transfer of the surface profile, and consequently resulted in poor surface design.
As is clear from comparison between the Example 1 and Comparative Example 1, and comparison between Example 6 and Comparative Example 5, the high cycle performance was dramatically increased by adopting the pellet blend of the present invention, even under the same contents of lubricant.

**[Table 1]**

| | Example 1 | Example 2 | Example 3 | Example 4 | Example 5 | Comparative example 1 | Comparative example 1 | Comparative example 3 | Comparative example 4 |
|---|---|---|---|---|---|---|---|---|---|
| Polyamide resin 1 (wt%) | 43.3 | 33.3 | 33.3 | | | 49.65 | 44.6 | 34.5 | |
| Polyamide resin 2 (wt%) | 5 | 5 | 5 | | | | 5 | 5 | |
| Polyamide resin 3 (wt%) | | | | 38.3 | | | | | |
| Polyamide resin 5 (wt%) | | | | | 37.8 | | | | 39.5 |
| Glass fiber (wt%) | 50 | 60 | 60 | 60 | 60 | 50 | 50 | 60 | 60 |
| Carbon black 1 (wt%) | 0.2 | 0.2 | 0.2 | 0.2 | 0.2 | 0.2 | 0.2 | 0.2 | 0.2 |
| Lubricant 1 (wt%) | | | | | | 0.15 | 0.2 | 0.3 | 0.3 |
| Lubricant pellet 1 (wt%) | 1.5 | 1.5 | | | 2 | | | | |
| Lubricant pellet 2 (wt%) | | | 1.5 | 1.5 | | | | | |
| Pellet (A)/lubricant pellet (B) (ratio by weight) | 98.5/1.5 | 98.5/1.5 | 98.5/1.5 | 98.5/1.5 | 98.0/2.0 | | | | |
| Lubricant content in composition (wt%) | 0.15 | 0.15 | 0.15 | 0.15 | 0.2 | 0.15 | 0.2 | 0.3 | 0.3 |
| Mold temperature (°C) | 120 | 120 | 120 | 90 | 100 | 120 | 120 | 120 | 100 |
| Flexural strength (MPa) | 380 | 430 | 434 | 300 | 313 | 378 | 383 | 425 | 310 |
| Flexural modulus (GPa) | 18.7 | 23.0 | 23.4 | 16.1 | 18.1 | 18.6 | 18.8 | 22.8 | 15.9 |
| Surface design | ⊚ | ⊚ | ⊚ | ○ | ○ | ⊚ | ⊚ | ○ | ○ |
| High cycle performance | | | | | | | | | |
| Necessary time for cooling (sec) | 3 | 4 | 3 | 3 | 4 | 9 | 7 | 6 | 8 |
| Mold releasing characteristics in continuous molding | ⊚ | ○ | ⊚ | ⊚ | ○ | × | Δ | Δ | × |

**Table 2**

| | Example 6 | Example 7 | Example 8 | Example 9 | Example 10 | Example 11 | Example 12 | Example 13 | Comp. example 5 | Comp. example 6 | Comp. example 7 | Comp. example 8 |
|---|---|---|---|---|---|---|---|---|---|---|---|---|
| Polyamide resin 1 (wt%) | 9.5 | 9.5 | 9.5 | 9.5 | | | 9.5 | 9.5 | 9.5 | 9.5 | 9.5 | |
| Polyamide resin 3 (wt%) | 21.5 | 23 | 21 | 22 | 22.2 | | 21.5 | 21.5 | 24.2 | 22 | 22 | 24 |
| Polyamide resin 4 (wt%) | 8 | 8 | 8 | 8 | 15.8 | | 8 | 8 | 8 | 8 | 8 | 15.7 |
| Polyamide resin 5 (wt%) | | | | | | 39 | | | | | | |
| Glass fiber (wt%) | 36 | 36 | 36 | 36 | 37 | 35 | 36 | 36 | 36 | 37 | 37 | 37 |
| Mica (wt%) | 19 | 19 | | | | | 19 | 19 | 19 | 20 | | |
| Talc 2 (wt%) | | | 19 | | 20 | | | | | | 20 | |
| wollastonite (2t%) | | | | 19 | | 22 | | | | | | 20 |
| Carbon black 2 (wt%) | 3 | 3 | 4 | 3 | 3 | 2 | 3 | 3 | 3 | 3 | 3 | 3 |
| Lubricant 1 (wt%) | | | | | | | | | 0.3 | | 0.5 | |
| Lubricant 4 (wt%) | | | | | | | | | | 0.5 | | |
| Lubricant 5 (wt%) | | | | | | | | | | | | 0.3 |
| Lubricant pellet 2 (wt%) | 3 | | 2.5 | 2.5 | | 2 | | | | | | |
| Lubricant pellet 3 (wt%) | | 1.5 | | | 2 | | | | | | | |
| Lubricant pellet 4 (wt%) | | | | | | | 3 | | | | | |
| Lubricant pellet 5 (wt%) | | | | | | | | 3 | | | | |
| Pellet (A) /lubricant pellet (B) (ratio by weight) | 97.0/3.0 | 98.5/1.5 | 97.5/2.5 | 97.5/2.5 | 98.0/2.0 | 98.0/2.0 | 97.0/3.0 | 97.0/3.0 | | | | |
| Lubricant content in composition (wt%) | 0.3 | 0.075 | 0.25 | 0.25 | 0.1 | 0.2 | 0.3 | 0.3 | 0.3 | 0.5 | 0.5 | 0.3 |
| Mold temperature (°C) | 90 | 90 | 90 | 90 | 90 | 100 | 90 | 90 | 90 | 90 | 90 | 90 |
| Flexural strength (MPa) | 290 | 288 | 250 | 267 | 233 | 265 | 290 | 290 | 268 | 277 | 245 | 230 |
| Flexural modulus (GPa) | 21.0 | 21.2 | 19.4 | 17.9 | 17.3 | 17.7 | 21.0 | 21.0 | 19.6 | 20.5 | 19.1 | 17.1 |
| Surface design | ⊚ | ⊚ | ⊚ | ⊚ | ○ | ⊚ | ⊚ | ⊚ | × | ○ | × | × |
| High cycle performance | | | | | | | | | | | | |
| Necessary time for cooling (sec) | 3 | 3 | 3 | 3 | 3 | 3 | 4 | 4 | 15 | 15 | 15 | 15 |
| Mold releasing performance in continuous molding | ⊚ | ⊚ | ⊚ | ⊚ | ⊚ | ⊚ | ⊚ | ⊚ | × | Δ | × | × |

### Industrial Applicability

The present invention made it possible to obtain the polyamide resin composition excellent in all of mechanical strength, surface design and high cycle performance. The molded articles composed of the polyamide resin composition of the present invention are excellent in the surface design, and are useful in particular for exterior and interior components of vehicles, and for components of construction materials.
This application is based on Japanese Patent Application No. 2006-297338 filed in Japan, the entire content of which is included in the present patent specification.

## Claims

1. A pellet blend containing:
a polyamide resin composition pellet (A) containing 30 to 100% by weight of a polyamide resin (a) and 70 to 0% by weight of an inorganic filler (b), the polyamide resin (a) containing at least a crystalline polyamide resin showing a crystallization-temperature on cooling stage (Tc) of 210°C or lower measured by differential scanning calorimeter and/or an amorphous polyamide resin (a-1); and
a lubricant pellet (B) containing 1 to 30% by weight (on the basis of the lubricant pellet) of a lubricant (c) in a polyamide resin (a-3),
at a ratio by weight of polyamide resin composition pellet (A)/lubricant pellet (B) of (80 to 99.5)/(20 to 0.5).

2. The pellet blend as described in Claim 1, wherein the content of the inorganic filler (b) in the polyamide resin composition pellet (A) is 15 to 60% by weight.

3. The pellet blend as described in Claim 1 or 2, wherein the lubricant pellet (B) further contains 5 to 50% by weight of an inorganic filler (d) in the lubricant pellet (B).

4. The pellet blend as described in any one of Claims 1 to 3, wherein the polyamide resin (a-1) is at least one species of polyamide resin selected from the group consisting of polyamide resin obtained from xylylenediamine and an α,ω-straight-chain aliphatic dibasic acid, polyamide 6, polyamide 6I/6T copolymer, and polyamide 66/6I copolymer.

5. The pellet blend as described in any one of Claims 1 to 3, wherein the polyamide resin (a-1) is at least two species of polyamide resin selected from the group consisting of polyamide resin obtained from xylylenediamine and an α,ω-straight-chain aliphatic dibasic acid, polyamide 6, polyamide 6I/6T copolymer, and polyamide 66/6I copolymer.

6. The pellet blend as described in any one of Claims 1 to 3, wherein the polyamide resin (a-1) contains at least a polyamide resin obtained from xylylenediamine and an α,ω-straight-chain aliphatic dibasic acid.

7. The pellet blend as described in any one of Claims 1 to 6, wherein the polyamide resin (a) contains at least polyamide 66 as a polyamide resin (a-2) other than the polyamide resin (a-1).

8. The pellet blend as described in any one of Claims 1 to 7, wherein the inorganic filler (b) is at least one species selected from the group consisting of glass fiber, mica, talc and wollastonite.

9. The pellet blend as described in any one of Claims 1 to 8, wherein the lubricant (c) is at least one species selected from the group consisting of metal salt of aliphatic acid, aliphatic acid ester, hydrocarbon-base compound and ketone compound.

10. A molded article obtained by using the pellet blend described in any one of Claims 1 to 9.

11. The molded article as described in Claim 10, which is used as a part of vehicle or construction material.

12. A method for manufacturing a pellet blend, comprising mixing a polyamide resin composition pellet (A) containing 30 to 100% by weight of a polyamide resin (a) and 70 to 0% by weight of an inorganic filler (b), the polyamide resin (a) containing at least a crystalline polyamide resin showing a crystallization-temperature on cooling stage (Tc) of 210°C or lower measured by differential scanning calorimeter and/or an amorphous polyamide resin (a-1); and
a lubricant pellet (B) containing 1 to 30% by weight (on the basis of the lubricant pellet) of lubricant (c) in a polyamide resin (a-3),
at a ratio by weight of polyamide resin composition pellet (A)/lubricant pellet (B) of (80 to 99.5)/(20 to 0.5).

13. A method of improving molding cycle performance of a resin composition pellet, which comprises mixing a polyamide resin composition pellet (A) containing 30 to 100% by weight of a polyamide resin (a) and 70 to 0% by weight of an inorganic filler (b), the polyamide resin (a) containing at least a crystalline polyamide resin showing a crystallization-temperature on cooling stage (Tc) of 210°C or lower measured by differential scanning calorimeter and/or an amorphous polyamide resin (a-1); and
a lubricant pellet (B) containing 1 to 30% by weight (on the basis of the lubricant pellet) of lubricant (c) in a polyamide resin (a-3),
at a ratio by weight of polyamide resin composition pellet (A)/lubricant pellet (B) of (80 to 99.5)/(20 to 0.5).
